# EUROPÄISCHE PATENTSCHRIFT

(11) **EP 3 616 310 B1**
(45) Veröffentlichungstag und Bekanntmachung des Hinweises auf die Patenterteilung: **22.12.2021**
(21) Anmeldenummer: 18719420.4
(22) Anmeldetag: 23.03.2018
(51) Int. Cl.: H02K 21/02, H02K 1/27

(54) **E-MOTOR MIT VERDREHBAREN ROTORSEGMENTEN ZUR REDUZIERUNG DES MAGNETFLUSSES**
ELECTRIC MOTOR WITH TURNABLE ROTOR SEGMENTS FOR REDUCING THE MAGNETIC FLUX
MOTEUR ÉLECTRIQUE À SEGMENTS DE ROTOR POUVANT TOURNER POUR LA RÉDUCTION DU FLUX MAGNÉTIQUE

(30) Priorität: 24.04.2017 DE 102017108670
(43) Veröffentlichungstag der Anmeldung: 04.03.2020
(73) Patentinhaber: Schaeffler Technologies AG & Co. KG, 91074 Herzogenaurach (DE)
(72) Erfinder: ENGLER, Miriam, 73344 Gruibingen (DE); SCHWANEMANN, Peter, 77815 Bühl (DE); GRAMANN, Matthias, 77871 Renchen (DE); REIK, Wolfgang, 77815 Bühl (DE); ANGRICK, Carsten, 77767 Appenweier (DE)
(86) Internationale Anmeldenummer: PCT/DE2018/100259
(87) Internationale Veröffentlichungsnummer: WO 2018/196910

(56) Entgegenhaltungen:
- EP-A2- 1 387 472
- DE-A1-102009 060 199
- US-A1- 2008 169 717
- US-A1- 2012 229 066
- US-A1- 2015 357 891

## Beschreibung

Die Erfindung betrifft eine elektrische Maschine mit einem Stator und einem Rotor, der um eine Achse drehbar ist, gemäß dem Oberbegriff des Anspruchs 1.

Aus der DE 197 43 314 A1 ist eine elektrische Maschine bekannt, die einen Stator und einen Rotor mit Permanentmagneten aufweist.

Der Rotor weist zwei oder mehr axial segmentierte Teilrotoren auf, die zueinander verschiebbar oder bewegbar sind. Abhängig von einer Drehzahl der elektrischen Maschine wird eine Feldschwächung durch Drehen von Teilrotoren in Bezug aufeinander durchgeführt, so dass die Pole der Teilrotoren relativ zueinander verschoben werden.

Eine solche Ausgestaltung ist jedoch in hohen Drehzahlbereichen einer elektrischen Maschine nur bedingt einsetzbar, da diese induzierte Spannungen erzeugt, die mit einem entsprechend hohen Strom kompensiert werden müssen, damit die Maschine bei dieser Drehzahl überhaupt betrieben werden kann bzw. damit Beschädigung der Elektronik vermieden werden können.

Eine elektrische Maschine gemäß dem Oberbegriff des Anspruchs 1 ist aus der DE 10 2009 060 199 A1 bekannt.

Bezüglich weiteren Standes der Technik wird auf die US 2012/229066 A1 und die US 2008/169717 A1 verwiesen.

Daher ist es Aufgabe der vorliegenden Erfindung, eine elektrische Maschine anzugeben, welche bei hohen Geschwindigkeiten bzw. Drehzahlen betreibbar ist, während hohe induzierte Spannungen vermeidbar sind.

Diese Aufgabe wird erfindungsgemäß durch die Merkmale des unabhängigen Patentanspruchs gelöst. Weitere vorteilhafte Weiterbildungen sind Gegenstand der Unteransprüche.

Erfindungsgemäß umfasst eine elektrische Maschine einen Stator und einen Rotor, der um eine Achse drehbar ist.

Der Rotor weist mindestens drei Rotorteilsegmente auf, von denen mindestens zwei Rotorteilsegmente relativ zueinander um die Achse verdrehbar sind. Somit sind verschiedene relative Positionierungen der mindestens zwei Rotorteilsegmente bzw. der mindestens zwei relativ zueinander verdrehbaren Rotorteilsegmente möglich.

Ferner umfasst die elektrische Maschine eine Verdreheinrichtung zum relativen Verdrehen der mindestens zwei relativ zueinander verdrehbaren Rotorteilsegmente. Auf diese Weise können mithilfe der Verdreheinrichtung relative Positionierungen der Rotorteilsegmente einfach realisiert werden.

Die Verdreheinrichtung verdreht in einem Drehzahlbereich über einem vorbestimmten Schwellwert einer Drehzahl der elektrischen Maschine die mindestens zwei relativ zueinander verdrehbaren Rotorteilsegmente derart relativ zueinander, dass sich magnetische Wirkungen der mindestens zwei relativ zueinander verdrehbaren Rotorteilsegmente im Wesentlichen vollständig auslöschen.

Eine Gesamtwirkung der elektrischen Maschine bestimmt sich dann durch mindestens ein drittes Rotorteilsegment.

Dadurch können sich die magnetischen Wirkungen der beiden relativ zueinander verdrehbaren Rotorteilsegmente im Wesentlichen auslöschen. Ferner kann vorteilhafterweise eine dritte magnetische Polanordnung eines dritten Rotorteilsegments, die vorzugsweise einen ersten und/oder zweiten Pol (Nordpol bzw. Südpol) aufweist, die technische Auslegung der elektrischen Maschine oberhalb des vorbestimmten Schwellwerts für die Drehzahl bestimmen.

Der Wortlaut im Wesentlichen wird in der vorliegenden Beschreibung derart verstanden, dass eine vollständige Auslöschung eines Magnetfelds einer magnetischen Polanordnung, die einen ersten oder zweiten Pol bzw. einen Süd-Pol oder einen NordPol oder umgekehrt umfasst, nicht möglich ist. Stattdessen soll unter im Wesentlichen zu verstehen sein, dass das erzeugte Magnetfeld eines Pols bzw. einer magnetischen Polanordnung zu wenigstens 50 Prozent seiner magnetischen Stärke, vorzugsweise zu über 80 Prozent seiner magnetischen Stärke, reduziert werden kann.

In der Folge können bei hohen Drehzahlen hohe induzierte Spannungen vermieden werden, so dass Schäden in z. B einem elektrischen Antriebssystem unterbunden werden können.

Nochmals mit anderen Worten ausgedrückt, ist es von Vorteil, wenn die Verdreheinrichtung der elektrischen Maschine die mindestens zwei relativ zueinander verdrehbaren Rotorteilsegmente derart relativ zueinander verdreht, dass sich vorteilhafterweise nach dem Überschreiten eines vorbestimmten Schwellwerts für die Drehzahl der elektrischen Maschine eine erste magnetische Polanordnung eines ersten Rotorteilsegments, die vorzugsweise einen ersten Pol (z. B. Nordpol) aufweist, einer zweiten magnetischen Polanordnung eines zweiten Rotorteilsegments, die vorzugsweise einen zweiten Pol (z. B. Südpol) aufweist, in Richtung der Achse gegenüberliegen, vorzugsweise zumindest teilweise gegenüberliegen oder günstigerweise vollständig gegenüberliegen. Je höher der Grad des Gegenüberliegens bzw. je mehr (bezogen auf die Fläche) zwei unterschiedlich gepolte magnetische Polanordnung gegenüberliegen, desto höher die Auslöschung deren erzeugter Magnetfelder.

Die mindestens drei Rotorteilsegmente weisen jeweils eine erste magnetische Polanordnung mit einem ersten Pol (z. B. Nordpol oder Südpol) und eine zweite magnetische Polanordnung mit einem zweiten Pol (z. B. Südpol oder Nordpol) auf.

Dabei ist es von Vorteil, wenn die erste magnetische Polanordnung und die zweite magnetische Polanordnung in einer Umfangsrichtung des Rotors alternieren.

Bevorzugterweise weist jede magnetische Polanordnung, insbesondere die erste magnetische Polanordnung und/oder die zweite magnetische Polanordnung, mindestens zwei magnetische Körper auf.

Diese bilden günstigerweise eine V-förmige Anordnung oder eine Speichenanordnung im Rotor aus. Auf diese Weise kann der magnetische Fluss axial innerhalb des Rotors geführt werden.

Ferner ist es möglich, dass mindestens einer oder mindestens zwei der magnetischen Körper bezüglich einer radialen Richtung des Rotors geneigt ist bzw. sind.

Auch kann vorgesehen sein, dass mindestens einer der magnetischen Körper einen Winkel zwischen +/-10 bis +/-60 Grad, bevorzugter zwischen +/-20 und +/-50 Grad, noch bevorzugter zwischen +/-35 und +/-45 Grad mit der radialen Richtung des Rotors einschließt.

Des Weiteren ist es bevorzugt, dass eine erste magnetische Polanordnung eines ersten Rotorteilsegments, die einen ersten Pol (z. B. Nordpol) aufweist, einer zweiten magnetischen Polanordnung eines zweiten Rotorteilsegments, die einen zweiten Pol (z. B. Südpol) aufweist, in Richtung der Achse gegenüberliegt. Auf diese Weise können sich entgegengesetzte magnetische Pol bzw. Polanordnungen gegenseitig auslöschen, wodurch bei hohen Drehzahlen hohe induzierte Spannungen vermieden werden können.

Vorzugsweise konzentriert zwischen der ersten magnetischen Polanordnung und der zweiten magnetischen Polanordnung eine Durchtrittsfläche einen magnetischen Fluss in Richtung der Achse und unterbindet vorteilhafterweise im Wesentlichen einen magnetischen Fluss in Richtung durch den Stator. Folglich können hohe induzierte Spannungen vermieden werden.

Ferner ist es bevorzugt, dass die mindestens zwei relativ zueinander verdrehbaren Rotorteilsegmente eine gleiche Breite aufweisen. Somit können die magnetischen Kräfte beider auf einfache Weise kompensiert werden, wenn die Magnete bzw. Pole ähnlich in Größe und/oder Stärke ausgebildet sind. Auch können somit mechanische Unwuchten vermeiden werden.

Des Weiteren weist die Verdreheinrichtung einen schaltbaren Elektromagnet auf, der das Verdrehen derart durchführt, dass eines der mindestens zwei relativ zueinander verdrehbaren Rotorteilsegmente in Richtung der Achse versetzt wird, anschließend um einen vorbestimmten Winkel verdreht wird und dann in eine entgegengesetzte Richtung zum Versetzen zurückgesetzt wird. Auf diese Weise kann ein einfacher Schaltvorgang mithilfe der Verdreheinrichtung durchgeführt werden.

Auch ist es von Vorteil, wenn die Verdreheinrichtung die mindestens zwei relativ zueinander verdrehbaren Rotorteilsegmente in einem Drehzahlbereich unter einem vorbestimmten Schwellwert einer Drehzahl der elektrischen Maschine derart relativ zueinander verdreht, dass sich vorzugsweise magnetische Wirkungen der mindestens zwei relativ zueinander verdrehbaren Rotorteilsegmente nicht im Wesentlichen vollständig auslöschen. Dadurch können sich die magnetischen Wirkungen der beiden relativ zueinander verdrehbaren Rotorteilsegmente im Wesentlichen nicht vollständig auslöschen. Ferner ist es in diesem Zusammenhang günstig, dass sich eine Gesamtwirkung der elektrischen Maschine durch die mindestens zwei relativ zueinander verdrehbaren Rotorteilsegmente und durch das mindestens eine dritte Rotorteilsegment bestimmt.

Auch ist es vorteilhaft, wenn die Verdreheinrichtung das relative Verdrehen der mindestens zwei relativ zueinander verdrehbaren Rotorteilsegmente in vorbestimmten Stufen oder stufenlos durchführt. Auf diese Weise können diverse magnetische Positionierungsszenarien der einzelnen Rotorteilsegmente zueinander realisiert werden.

Nachfolgend wird der oben dargestellte Erfindungsgedanke ergänzend mit anderen Worten ausgedrückt.

Dieser Gedanke betrifft vorzugsweise vereinfacht dargestellt eine elektrische Maschine mit Magneten im Rotor, die bei hohen Drehzahlen einfach betreibbar ist.

Herkömmliche E-Motoren mit Magneten im Rotor haben im Gegensatz zu anderen Motortopologien (Asynchronmotor, fremderregte Motoren, Reluktanzmotoren) den Nachteil, dass bei hohen Drehzahlen sehr hohe induzierte Spannungen entstehen.

Jedoch muss bei elektrischen Maschinen mit Magneten im Rotor ein relativ hoher Strom allein dafür aufgewendet werden, die hohe induzierte Spannung bei hohen Drehzahlen zu kompensieren. Anders ausgedrückt ist es notwendig, bei der vorbeschriebenen Konfiguration den Motor bei hohen Drehzahlen in Feldschwächung zu betreiben.

Zudem können im Fehlerfall bei hohen Drehzahlen unzulässig hohe Spannungen entstehen, welche zu Schäden im elektrischen Antriebssystem oder anderen am Bordnetz beteiligter System führen können.

Daher weist erfindungsgemäß eine elektrische Maschine einen Stator und einen Rotor auf, der um eine Achse drehbar ist, wobei der Rotor mindestens drei Rotorteilsegmente aufweist, von denen mindestens zwei Rotorteilsegmente relativ zueinander um die Achse verdrehbar sind.

Die elektrische Maschine umfasst eine Verdreheinrichtung zum relativen Verdrehen der mindestens zwei relativ zueinander verdrehbaren Rotorteilsegmente.

Die Verdreheinrichtung verdreht in einem Drehzahlbereich über einem vorbestimmten Schwellwert einer Drehzahl der elektrischen Maschine die mindestens zwei relativ zueinander verdrehbaren Rotorteilsegmente derart relativ zueinander, dass sich magnetische Wirkungen der mindestens zwei relativ zueinander verdrehbaren Rotorteilsegmente im Wesentlichen vollständig auslöschen und sich eine Gesamtwirkung der elektrischen Maschine durch mindestens ein drittes Rotorteilsegment bestimmt.

Wird nun beispielsweise ein Rotorteilsegment um exakt einen Pol relativ zu einem weiteren Rotorteilsegment versetzt, schließen sich vorzugsweise die Feldlinien nicht mehr über den radialen und tangentialen Weg über den Stator, sondern in axialer Richtung bzw. in Richtung der Achse/Drehachse der elektrischen Maschine zu großen Teilen innerhalb des Rotors.

Somit kann die Durchflutung des Stators deutlich reduziert werden, wodurch sich die induzierte Spannung auf einen zulässigen Wert reduzieren lässt, wodurch wiederum ein sicherer Zustand bewerkstelligt werden kann.

Eine nur teilweise Verschränkung führt vorzugsweise dazu, dass der Feldschwächestrom reduziert werden kann, was die Effizienz des Antriebssystems erhöht. Nachstehend noch einige Merkmale der vorliegenden Erfindung:
vorzugsweise Umlenkung des radialen Flusses in axiale Richtung bzw. in Richtung der Achse/Drehachse und damit einhergehend eine Feldschwächung;
dadurch ergibt sich vorzugsweise in der Konsequenz ein elektrischer Motor bzw. eine elektrische Maschine mit 3D Flussführung;
es erfolgt eine Verdrehung der Rotorteilsegmente untereinander durch eine Verdreheinrichtung, welche einen schaltbaren Elektromagneten aufweist, vorzugsweise z. B. mithilfe einer Art Magnetbremse; anders ausgedrückt ist es bevorzugt, wenn ein schaltbarer Magnet einer Verdreheinrichtung ein Rotorteilsegment ein Stück von den anderen Rotorteilsegmenten in Richtung der Drehachse zieht, dieses vorzugsweise um den gewünschten Winkel verdreht und es vorzugsweise auf den Rotor zurückschnappen lässt.

Nachstehend wird die Erfindung anhand eines Ausführungsbeispiels in Verbindung mit zugehörigen Zeichnungen näher erläutert. Diese zeigen schematisch:
- **Fig. 1**: einen dreidimensional geschnittenen Teil einer elektrischen Maschine mit einem Rotor und einem Stator;
- **Fig. 2**: einen dreidimensional geschnittenen Teil einer elektrischen Maschine mit einem Rotor und einem Stator, in einer versetzten Perspektive im Vergleich zu Figur 1;
- **Fig. 3**: eine Draufsicht auf ein vorderes Rotorteilsegment aus Figuren 1 und 2; und
- **Fig. 4**: eine Draufsicht auf ein hinteres Rotorteilsegment aus Figuren 1 und 2.

In der nachfolgenden Beschreibung werden gleiche Bezugszeichen für gleiche Gegenstände verwendet.

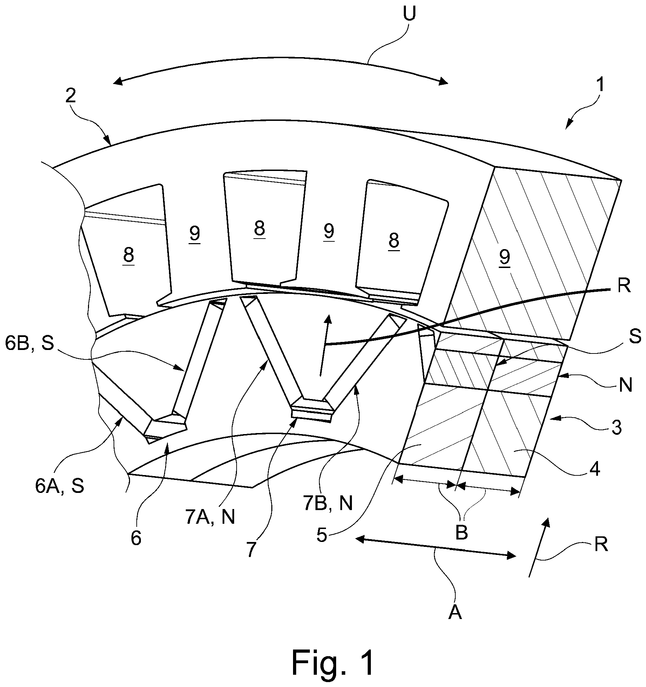

Figur 1 zeigt einen dreidimensional geschnittenen Teil einer elektrischen Maschine 1 mit einem Rotor 3 und einem Stator 2.

Genauer dargestellt zeigt Figur 1 eine elektrische Maschine 1 mit einem Stator 2 und einem Rotor 3, der um eine Achse A drehbar ist.

Dabei weist der Rotor 3 drei Rotorteilsegmente auf, von denen lediglich zwei Rotorteilsegmente 4, 5 dargestellt sind, das dritte Rotorteilsegment schließt entweder an das Rotorteilsegmente 4 oder an das Rotorteilsegmente 5 an.

Die zwei Rotorteilsegmente 4, 5 sind relativ zueinander um die Achse A verdrehbar.

Zum relativen Verdrehen der zwei relativ zueinander verdrehbaren Rotorteilsegmente 4, 5 dient eine Verdreheinrichtung (nicht dargestellt).

Diese verdreht in einem Drehzahlbereich über einem vorbestimmten Schwellwert einer Drehzahl der elektrischen Maschine 1 die zwei relativ zueinander verdrehbaren Rotorteilsegmente 4, 5 derart relativ zueinander, dass sich Wirkungen der zwei relativ zueinander verdrehbaren Rotorteilsegmente 4, 5 im Wesentlichen vollständig auslöschen und eine Gesamtwirkung der elektrischen Maschine 1 durch ein drittes Rotorteilsegment (nicht dargestellt) bestimmt wird.

Ferner zeigt Figur 1, dass die Rotorteilsegmente 4, 5, aber auch das nicht dargestellt dritte Rotorteilsegment, jeweils eine erste magnetische Polanordnung 6 mit einem ersten Pol N und eine zweite magnetische Polanordnung 7 mit einem zweiten Pol S aufweisen. Dabei alternieren die erste magnetische Polanordnung 6 und die zweite magnetische Polanordnung 7 Umfangsrichtung U des Rotors 3 bzw. der Rotorteilsegmente 4, 5.

Obigen Sachverhalte nochmals anders ausgedrückt bzw. genauer dargestellt, ist die Verdreheinrichtung (nicht dargestellt) in der Lage die zwei relativ zueinander verdrehbaren Rotorteilsegmente 4, 5 relativ zueinander zu verdrehen.

Und zwar können die Rotorteilsegmente 4, 5 derart von der Verdreheinrichtung verdreht werden, dass sich nach dem Überschreiten eines vorbestimmten Schwellwerts für die Drehzahl der elektrischen Maschine 1 eine erste magnetische Polanordnung 6 des ersten Rotorteilsegments 4, die einen ersten Pol N aufweist, einer zweiten magnetischen Polanordnung 7 des zweiten Rotorteilsegments 5, die einen zweiten Pol S aufweist, in Richtung der Achse A gegenüberliegen.

Auf diese Weise löschen sich die magnetischen Wirkungen der beiden Rotorteilsegmente 4, 5 im Wesentlichen aus und eine dritte magnetische Polanordnung (nicht dargestellt) eines dritten Rotorteilsegments (nicht dargestellt), die einen ersten oder zweiten Pol N, S aufweist, bestimmt die technische Auslegung der elektrischen Maschine 1.

Zwar nicht in Figur 1 gezeigt, jedoch weist die Verdreheinrichtung einen schaltbaren Elektromagnet auf, der das Verdrehen derart durchführt, dass eines der zwei relativ zueinander verdrehbaren Rotorteilsegmente 4, 5 in Richtung der Achse A versetzt wird, anschließend um einen vorbestimmten Winkel verdreht und in eine entgegengesetzte Richtung zum Versetzen zurückgesetzt wird.

Wie Figur 1 klar zeigt, weist jeder der magnetischen Polanordnungen 6, 7 zwei magnetische Körper 6A, 6B bzw. 7A, 7B auf. Diese bilden eine V-förmige Anordnung im Rotor 3.

Mit anderen Worten geschildert, sind die magnetischen Körper 6A, 6B bzw. 7A, 7B bezüglich einer radialen Richtung R des Rotors 3 geneigt.

Betreffend die Neigung ist festzuhalten, dass jeder der magnetischen Körper 6A, 6B; 7A, 7B einen Winkel zwischen +/-39 und +/-41 Grad mit der radialen Richtung R des Rotors 3 einschließt.

Wie Figur 1 ferner zeigt, weisen die zwei relativ zueinander verdrehbaren Rotorteilsegmente 4, 5 eine gleiche Breite B auf.

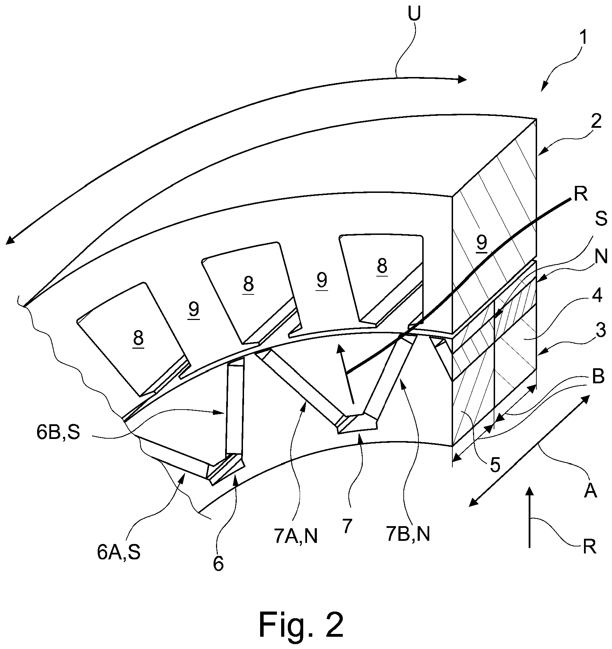

Figur 2 zeigt ähnlich wie Figur 1 einen dreidimensional geschnittenen Teil der elektrischen Maschine 1 mit Rotor 3 und Stator 2, jedoch in einer versetzten Perspektive im Vergleich zu Figur 1.

Betreffend die weiteren Ausführungen wird zur Vermeidung unnötiger Wiederholungen auf die Ausführungen zu Figur 1 verwiesen, die hier analog anwendbar sind.

Daher finden sich nachstehend lediglich Ergänzungen, die ebenfalls auf Figur 1 zutreffen.

So zeigen Figuren 1 und 2 den Stator 2, der mehrere Nuten 8 bzw. Aussparungen für Wicklung sowie diverse Zähne 9 bzw. Flussführungen aufweist.

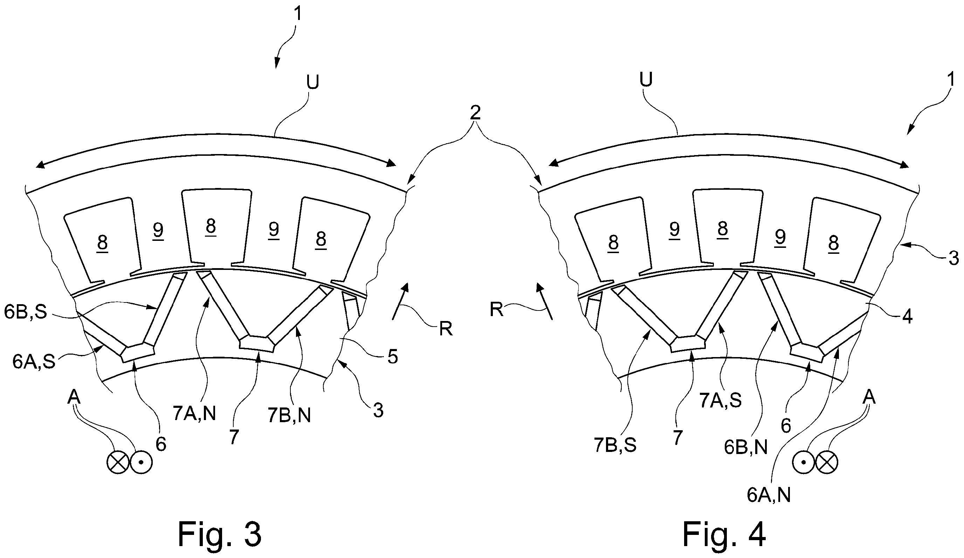

Während Figur 3 eine Draufsicht auf ein vorderes Rotorteilsegment bzw. auf das Rotorteilsegment 5 aus Figuren 1 und 2 darstellt, zeigt Figur 4 eine Draufsicht auf ein hinteres Rotorteilsegment bzw. auf das Rotorteilsegment 4, ebenfalls in den Figuren 1 und 2 zu erkennen.

Betreffend die weiteren Ausführungen wird zur Vermeidung unnötiger Wiederholungen auf die Ausführungen betreffend die Figuren 1 und 2 verwiesen, die hier analog auf die Figuren 3 und 4 anwendbar sind.

Daher finden sich nachstehend Ergänzungen, die ebenfalls auf Figuren 1 und 2 zutreffen.

So zeigen die Figuren 3 und 4, dass jeweils eine erste magnetische Polanordnung 6 des ersten Rotorteilsegments 4, die einen ersten Pol N aufweist, in Richtung der Achse A einer zweiten magnetischen Polanordnung 7 des zweiten Rotorteilsegments 4, die einen zweiten Pol S aufweist, gegenüberliegt.

In der Konsequenz ergibt sich zwischen den ersten magnetischen Polanordnungen 6 und den zweiten magnetischen Polanordnungen 7 jeweils eine Durchtrittsfläche, welche einen magnetischen Fluss in Richtung der Achse A konzentriert. Dadurch wird im Wesentlichen ein magnetischer Fluss in Richtung durch den Stator 2 unterbunden.

Selbstverständlich ist es auch möglich, dass die Verdreheinrichtung (nicht dargestellt) die zwei relativ zueinander verdrehbaren Rotorteilsegmente 4, 5 in einem Drehzahlbereich unter einem vorbestimmten Schwellwert einer Drehzahl der elektrischen Maschine 1 derart relativ zueinander verdreht, dass sich magnetische Wirkungen der zwei relativ zueinander verdrehbaren Rotorteilsegmente 4, 5 nicht im Wesentlichen vollständig auslöschen.

Folglich wird eine Gesamtwirkung der elektrischen Maschine 1 durch die zwei relativ zueinander verdrehbaren Rotorteilsegmente 4, 5 und durch das dritte Rotorteilsegment (nicht dargestellt) bestimmt.

Des Weiteren sei angemerkt, dass die Verdreheinrichtung das relative Verdrehen der zwei relativ zueinander verdrehbaren Rotorteilsegmente 4, 5 in vorbestimmten Stufen oder stufenlos durchführen kann.

### Bezugszeichenliste

- 1: Elektrische Maschine
- 2: Stator
- 3: Rotor
- 4: erstes Rotorteilsegment
- 5: zweites Rotorteilsegment
- 6: erste magnetische Polanordnung
- 6A: magnetischer Körper
- 6B: magnetischer Körper
- 7: zweite magnetische Polanordnung
- 7A: magnetischer Körper
- 7B: magnetischer Körper
- 8: Nut / Aussparung für Wicklung
- 9: Zahn / Flussführung Stator

- A: Achse / Drehachse
- B: Breite
- N: erster Pol
- S: zweiter Pol
- R: radiale Richtung
- U: Umfangsrichtung

## Patentansprüche

1. Elektrische Maschine (1), die aufweist:
einen Stator (2),
einen Rotor (3), der um eine Achse (A) drehbar ist und mindestens drei Rotorteilsegmente (4, 5) aufweist, die jeweils eine erste magnetische Polanordnung (6) mit einem ersten Pol (N) und eine zweite Polanordnung (7) mit einem zweiten Pol (S) aufweisen und von denen mindestens zwei Rotorteilsegmente (4, 5) relativ zueinander um die Achse (A) verdrehbar sind, und
eine einen schaltbaren Elektromagnet aufweisende Verdreheinrichtung zum relativen Verdrehen der mindestens zwei relativ zueinander verdrehbaren Rotorteilsegmente (4, 5), wobei die Verdreheinrichtung in einem Drehzahlbereich über einem vorbestimmten Schwellwert einer Drehzahl der elektrischen Maschine (1) die mindestens zwei relativ zueinander verdrehbaren Rotorteilsegmente (4, 5) derart relativ zueinander verdreht, dass sich magnetische Wirkungen der mindestens zwei relativ zueinander verdrehbaren Rotorteilsegmente (4, 5) im Wesentlichen vollständig auslöschen und sich eine Gesamtwirkung der elektrischen Maschine (1) durch mindestens ein drittes Rotorteilsegment bestimmt,
***dadurch gekennzeichnet, dass***
der Elektromagnet das Verdrehen derart durchführt, dass eines der mindestens zwei relativ zueinander verdrehbaren Rotorteilsegmente (4, 5) in Richtung der Achse (A) versetzt, anschließend um einen vorbestimmten Winkel verdreht und dann in eine entgegengesetzte Richtung zum Versetzen zurückgesetzt wird.

2. Elektrische Maschine (1) nach Anspruch 1, wobei die erste magnetische Polanordnung (6) und die zweite magnetische Polanordnung (7) in einer Umfangsrichtung (U) des Rotors (3) alternieren.

3. Elektrische Maschine nach Anspruch 2, wobei die erste magnetische Polanordnung (6) und die zweite magnetische Polanordnung (7) mindestens zwei magnetische Körper (6A, 6B; 7A, 7B) aufweisen, die eine V-förmige Anordnung oder eine Speichenanordnung in dem Rotor (3) ausbilden.

4. Elektrische Maschine (1) nach Anspruch 3, wobei mindestens einer oder mindestens zwei der magnetischen Körper (6A, 6B; 7A, 7B) bezüglich einer radialen Richtung (R) des Rotors (3) geneigt sind.

5. Elektrische Maschine (1) nach Anspruch 3 oder 4, wobei mindestens einer der magnetischen Körper (6A, 6B; 7A, 7B) einen Winkel zwischen +/-10 bis +/-60 Grad, bevorzugter zwischen +/-20 und +/-50 Grad, noch bevorzugter zwischen +/-35 und +/-45 Grad mit der radialen Richtung (R) des Rotors (3) einschließt.

6. Elektrische Maschine nach einem der Ansprüche 2 bis 5, wobei
die den ersten Pol (N) aufweisende erste magnetische Polanordnung (6) eines ersten Rotorteilsegments (4) der den zweiten Pol (S) aufweisenden zweiten magnetischen Polanordnung (7) eines zweiten Rotorteilsegments (5) in Richtung der Achse (A) gegenüberliegt, und
zwischen der ersten magnetischen Polanordnung (6) und der zweiten magnetischen Polanordnung (7) eine Durchtrittsfläche einen magnetischen Fluss in Richtung der Achse (A) konzentriert und im Wesentlichen einen magnetischen Fluss in Richtung durch den Stator (2) unterbindet.

7. Elektrische Maschine (1) nach einem der Ansprüche 1 bis 6, wobei die mindestens zwei relativ zueinander verdrehbaren Rotorteilsegmente (4, 5) eine gleiche Breite (B) aufweisen.

8. Elektrische Maschine (1) nach einem der Ansprüche 1 bis 7, wobei die Verdreheinrichtung die mindestens zwei relativ zueinander verdrehbaren Rotorteilsegmente (4, 5) in einem Drehzahlbereich unter einem vorbestimmten Schwellwert einer Drehzahl der elektrischen Maschine (1) derart relativ zueinander verdreht, dass sich magnetische Wirkungen der mindestens zwei relativ zueinander verdrehbaren Rotorteilsegmente (4, 5) nicht im Wesentlichen vollständig auslöschen und sich eine Gesamtwirkung der elektrischen Maschine (1) durch die mindestens zwei relativ zueinander verdrehbaren Rotorteilsegmente (4, 5) und durch das mindestens eine dritte Rotorteilsegment bestimmt.

9. Elektrische Maschine (1) nach einem der Ansprüche 1 bis 8, wobei die Verdreheinrichtung das relative Verdrehen der mindestens zwei relativ zueinander verdrehbaren Rotorteilsegmente (4, 5) in vorbestimmten Stufen oder stufenlos durchführt.

## Claims

1. An electric machine (1), having:
a stator (2),
a rotor (3) which is rotatable about an axis (A) and has at least three rotor sub-segments (4, 5), each having a first magnetic pole arrangement (6) having a first pole (N) and a second pole arrangement (7) having a second pole (S), of which at least two rotor sub-segments (4, 5) can be rotated relative to one another about the axis (A), and
a rotating device having a switchable electromagnet for the relative rotation of the at least two rotor sub-segments (4, 5) that can be rotated relative to one another, wherein the rotating device rotates the at least two relatively rotatable rotor sub-segments (4, 5) relative to one another in a rotational speed range above a predetermined threshold value of a rotational speed of the electric machine (1) such that magnetic effects of the at least two rotor sub-segments (4, 5) that can be rotated relative to one another substantially cancel each other out and an overall magnetic effect of the electric machine (1) is determined by at least one third rotor sub-segment,
***characterised in that***
the electromagnet executes the rotation in such a way that one of the at least two rotor sub-segments (4, 5) that can be rotated relative to one another is pulled by the electromagnet along the direction of the axis (A), then rotated by a predetermined angle and then repositioned in an opposite direction for pulling on the rotor.

2. The electric machine (1) according to claim 1, wherein the first magnetic pole arrangement (6) and the second magnetic pole arrangement (7) alternate in a circumferential direction (U) of the rotor (3).

3. The electric machine according to claim 2, wherein the first magnetic pole arrangement (6) and the second magnetic pole arrangement (7) have at least two magnetic bodies (6A, 6B; 7A, 7B) which form a V-shaped arrangement or a spoke arrangement in the rotor (3).

4. The electric machine (1) according to claim 3, wherein at least one or at least two of the magnetic bodies (6A, 6B; 7A, 7B) are inclined with respect to a radial direction (R) of the rotor (3).

5. The electric machine (1) according to claim 3 or 4, wherein at least one of the magnetic bodies (6A, 6B; 7A, 7B) encloses an angle between +/-10 to +/-60 degrees, preferably between +/-20 and +/-50 degrees, more preferably between +/-35 and +/-45 degrees with the radial direction (R) of the rotor (3).

6. The electric machine according to any one of claims 2 to 5, wherein
the first magnetic pole arrangement (6) of a first rotor sub-segment (4) having the first pole (N) is opposite the second magnetic pole arrangement (7) of a second rotor sub-segment (5) having the second pole (S) in the direction of the axis (A), and
between the first magnetic pole arrangement (6) and the second magnetic pole arrangement (7) a passage area concentrates a magnetic flux in the direction of the axis (A) and substantially prevents a magnetic flux in the direction through the stator (2).

7. The electric machine (1) according to any one of claims 1 to 6, wherein the at least two rotor sub-segments (4, 5) which can be rotated relative to one another have the same width (B).

8. The electric machine (1) according to any one of claims 1 to 7, wherein the rotating device rotates the at least two rotor sub-segments (4, 5) that can be rotated relative to one another in a speed range below a predetermined threshold value of a speed of the electric machine (1) relative to one another in such a way that the magnetic effects of the at least two rotor sub-segments (4, 5) that can be rotated relative to one another do not substantially cancel each other out and an overall magnetic effect of the electric machine (1) is determined by the at least two rotor sub-segments (4, 5) that can be rotated relative to one another and by the at least one third rotor sub-segment.

9. The electric machine (1) according to any one of claims 1 to 8, wherein the rotating device executes the relative rotation of the at least two rotor sub-segments (4, 5) that can be rotated relative to one another in predetermined steps or continuously.

## Revendications

1. Machine électrique (1), comportant :
un stator (2),
un rotor (3), lequel peut tourner autour d'un axe (A) et lequel comporte au moins trois segments partiels (4, 5) de rotor présentant respectivement un premier agencement de pôle magnétique (6) avec un premier pôle (N) et un second agencement de pôle magnétique (7) avec un second pôle (S), parmi lesquels au moins deux segments partiels (4, 5) de rotor peuvent tourner l'un par rapport à l'autre autour de l'axe (A) et
un dispositif de rotation comportant un électroaimant commutable destiné à la rotation relative des au moins deux segments partiels (4, 5) de rotor pouvant tourner l'un par rapport à l'autre, le dispositif de rotation faisant tourner, dans une plage de vitesse de rotation supérieure à une valeur seuil prédéterminée d'une vitesse de rotation de la machine électrique (1), les au moins deux segments partiels (4, 5) de rotor pouvant tourner l'un par rapport à l'autre, de telle sorte que les effets magnétiques des au moins deux segments partiels (4, 5) de rotor pouvant tourner l'un par rapport à l'autre s'annulent sensiblement et un effet global de la machine électrique (1) est déterminé au moyen d'au moins un troisième segment partiel de rotor,
***caractérisée en ce que***
l'électroaimant effectue la rotation de telle sorte que l'un des au moins deux segments partiels (4, 5) de rotor pouvant tourner l'un par rapport à l'autre est tiré en direction de l'axe (A), puis tourné d'un angle prédéterminé et ensuite reculé dans une direction opposée à la traction.

2. Machine électrique (1) selon la revendication 1, dans laquelle le premier agencement de pôle magnétique (6) et le second agencement de pôle magnétique (7) alternent dans une direction circonférentielle (U) du rotor (3).

3. Machine électrique selon la revendication 2, dans laquelle le premier agencement de pôle magnétique (6) et le second agencement de pôle magnétique (7) comportent au moins deux corps magnétiques (6A, 6B ; 7A, 7B), lesquels forment dans le rotor (3) un agencement en forme de V ou un agencement à rayons.

4. Machine électrique (1) selon la revendication 3, dans laquelle au moins un ou au moins deux des corps magnétiques (6A, 6B ; 7A, 7B) sont inclinés par rapport à une direction radiale (R) du rotor (3).

5. Machine électrique (1) selon la revendication 3 ou 4, dans laquelle au moins un des corps magnétiques (6A, 6B ; 7A, 7B) forme un angle, dans la plage comprise entre +/-10 et +/-60 degrés, de préférence entre +/-20 et +/-50 degrés, de préférence encore entre +/-35 et +/-45 degrés, avec la direction radiale (R) du rotor (3).

6. Machine électrique selon l'une quelconque des revendications 2 à 5, dans laquelle le premier agencement de pôle magnétique (6) d'un premier segment partiel (4) de rotor comportant le premier pôle (N) est opposé au second agencement de pôle magnétique (7) d'un deuxième segment partiel (5) de rotor comportant le second pôle (S) dans la direction de l'axe (A) et
entre le premier agencement de pôle magnétique (6) et le second agencement de pôle magnétique (7), une zone de passage concentre un flux magnétique dans la direction de l'axe (A) et empêche essentiellement un flux magnétique dans la direction à travers le stator (2).

7. Machine électrique (1) selon l'une quelconque des revendications 1 à 6, dans laquelle les au moins deux segments partiels (4, 5) de rotor pouvant tourner l'un par rapport à l'autre présentent une même largeur (B).

8. Machine électrique (1) selon l'une quelconque des revendications 1 à 7, dans laquelle le dispositif de rotation fait tourner les au moins deux segments partiels (4, 5) de rotor pouvant tourner l'un par rapport à l'autre dans une plage de vitesse de rotation inférieure à une valeur seuil prédéterminée d'une vitesse de rotation de la machine électrique (1) les uns par rapport aux autres de telle sorte que les effets magnétiques des au moins deux segments partiels (4, 5) de rotor pouvant tourner l'un par rapport à l'autre ne s'annulent sensiblement pas et un effet global de la machine électrique (1) est déterminé au moyen des au moins deux segments partiels (4, 5) de rotor pouvant tourner l'un par rapport à l'autre et par l'au moins un troisième segment partiel de rotor.

9. Machine électrique (1) selon l'une quelconque des revendications 1 à 8, dans laquelle le dispositif de rotation met en œuvre la rotation relative des au moins deux segments partiels (4, 5) de rotor pouvant tourner l'un relativement à l'autre par pas prédéterminés ou en continu.
